# EUROPÄISCHE PATENTANMELDUNG

(11) **EP 2 204 253 A1**
(43) Veröffentlichungstag der Anmeldung: **07.07.2010**
(21) Anmeldenummer: 10159759.9
(22) Anmeldetag: 18.01.2007
(51) Int. Cl.: B23K 11/11, B23K 11/30, B23K 11/25

(54) **Band zum Schutz der Elektroden einer Punktschweißzange**

(30) Priorität: 08.02.2006 AT 1932006
(62) Teilanmeldung aus: 07701268.0
(71) Anmelder: Fronius International GmbH, 4643 Pettenbach (AT)
(72) Erfinder: Loipetsberger, Mario, 4690, Oberndorf (AT)
(74) Vertreter: Sonn & Partner Patentanwälte

(57) **Zusammenfassung**

Die Erfindung betrifft ein Band (7) zum Schutz der Elektroden (6) einer Punktschweißzange zum Schweißen von Blechen (3, 4) aus Aluminium oder eine Aluminium-Legierung oder aus Stahl bzw. Stahllegierungen mit einem Trägermaterial (24), wobei an der den Blechen (3, 4) zugewandten Seite (15) zumindest eine elektrisch leitfähige Schicht (16) angeordnet ist. Zur Schaffung eines derartigen Bandes (7), mit dem die Standzeit der Elektrode (6) erhöht werden kann, ist an der der Elektrode (6) zugewandten Seite (17) des Trägermaterials (24) eine Schicht (19) aus Nickel bzw. einer Nickel-Legierung oder eine Schicht (16, 21) aus Kupfer oder zwei Schichten (22, 23), eine Schicht (22) aus Kupfer und eine Schicht (23) aus Nickel bzw. einer Nickel-Legierung vorgesehen.

## Beschreibung

Die Erfindung betrifft ein Band zum Schutz der Elektroden einer Punktschweißzange zum Schweißen von Blechen aus Aluminium bzw. einer Aluminium-Legierung oder aus Stahl bzw. Stahllegierungen, wie es in den Oberbegriffen der Ansprüche 1, 3 und 4 beschrieben ist.

Die WO 2004/022278 A1 beschreibt ein Verfahren zur Qualitätsüberwachung von Punktschweißungen, insbesondere für Roboteranwendungen. Zumindest zwei Elektroden werden unter Zwischenlegung der miteinander zu verschweißenden Bleche gegeneinander gepresst und mit Energie beaufschlagt. Eine Bewertung des dabei entstehenden Schweißpunktes wird über ein Auswertemittel, insbesondere ein optisches Bilderfassungsmittel, durchgeführt. Zwischen den Elektroden bzw. Elektrodenkappen und den Blechen wird ein Band eingelegt, welches die Elektroden vor Abnützung schützt. Das Band ist derart ausgebildet, dass am Band ein spiegelbildlicher Abdruck des am Blech geschaffenen Schweißpunktes entsteht. Dieser Abdruck wird vom Auswertemittel erfasst und ausgewertet. Vom Abdruck kann auf die Größe, Form und Lage des Schweißpunktes und somit auf die Qualität der Schweißung rückgeschlossen werden. Bevorzugt wird beim Verschweißen von Aluminium-Blechen ein Weißblech-Band bzw. ein Band mit einer Zinn-Beschichtung und beim Verschweißen von verzinkten Blechen ein Kupfer-Band bzw. ein Band mit einer Beschichtung aus Kupfer eingesetzt.

Nachteilig ist hierbei, dass durch die Zinn-Schicht direkt am Material des Bandes eine aussagekräftige Auswertung des spiegelbildlichen Schweißpunktes am Band erst mehrere Stunden später sinnvoll ist. Erst nach dieser Zeit hat sich der erforderliche Kontrast für die optische Erfassung durch das Auswertemittel eingestellt.

Aus der US 5 552 573 A ist ein Elektrodenschutzband für ein Widerstandsschweißverfahren für Aluminium oder Aluminium-Legierungen bekannt, welches aus einem Grundmaterial besteht, welches beidseitig mit dem gleichen oder einem unterschiedlichen Material beschichtet ist. Das Grundmaterial besteht aus Eisen, Stahl, Kupfer oder einer Kupferlegierung und weist eine Dicke von 0,02 bis 1 mm auf. Die aufgetragenen Schichten können aus Nickel, Titan, Niob, Molybdän, Wolfram, Chrom, Kobalt oder Legierungen daraus bestehen und weisen eine Dicke im Bereich von 1 bis 100 µm auf.

Nachteilig ist hierbei, dass die einzelnen Schichten am Grundmaterial aufgrund deren geringer Dicke keinen ausreichenden Kontrast zur Erfassung und Aufnahme des spiegelbildlichen Abdrucks des Schweißpunktes hervorrufen. Die bekannten Schichten dienen lediglich dazu, die Standzeit bzw. Haltbarkeit der Elektroden wesentlich zu erhöhen. Mit den bekannten Beschichtungen können die Elektroden auch nur beim Verschweißen von Aluminium oder Aluminium-Legierungen geschützt werden.

Verschiedene Bänder zum Schutz der Elektroden einer Punktschweißzange zum Schweißen von Blechen aus verschiedenen Werkstoffen sind auch aus der WO 2004/004961 A2, der WO 2004/078404 A1 und der JP 5 318 136 A bekannt.

Die Aufgabe der vorliegenden Erfindung besteht in der Schaffung oben genannter Bänder zum Schutz der Elektroden einer Punktschweißzange, wodurch die Haltbarkeit bzw. die Standzeit der Elektrode beim Punktschweißen von Blechen aus Stahl bzw. Stahllegierungen und Aluminium bzw. Aluminium-Legierungen durch den Einsatz eines entsprechenden Bandes wesentlich zu erhöhen.

Eine Aufgabe der Erfindung wird durch ein Band gemäß Anspruch 1 gelöst, bei dem die Nickel-Schicht mit einer Dicke von 0,1 µm bis 0,5 µm auf einer auf dem Trägermaterial aufgetragenen Haftschicht aus Nickel angeordnet ist. Dieses Elektrodenschutzband eignet sich insbesondere bei der Verschweißung von Blechen aus Aluminium oder einer Aluminium-Legierung. Durch die Kombination der auf dem Trägermaterial aufgetragenen Haftschicht und der Schicht aus Nickel wird erreicht, dass für die Punktschweißung höhere Ströme eingesetzt werden können, wobei die dadurch erhöhte Gefahr eines Festklebens des Trägermaterials bzw. des Bandes am Blech durch die Schichten entsprechend stark reduziert bzw. eliminiert wird.

Vorteilhafterweise weist die Haftschicht aus Nickel eine Dicke im Bereich um 200 nm auf.

Die Aufgabe der Erfindung wird auch durch ein Band gemäß Anspruch 3 gelöst, wobei die Kupfer-Schichten eine Dicke zwischen 0,1 µm bis 0,6 µm aufweisen. Vorteilhaft ist hierbei, dass durch die entsprechende Dicke der Schicht aus Kupfer ein Hineindiffundieren des Trägermateriales in die Elektrodenkontaktfläche verhindert wird und somit die Standzeit bzw. Haltbarkeit der Elektrode erhöht wird. Des Weiteren wird durch die entsprechende Dicke der Schicht aus Kupfer auch in vorteilhafter Weise erreicht, dass die Kupfer-Schicht den Kontaktübergang von der Elektrode auf das Band verbessert. Ebenso ist auch von Vorteil, dass durch die Schicht aus Kupfer ein Korrosionsschutz für das Trägermaterial bzw. das Band gegeben ist. Durch die Kupfer-Schicht auf der Blechseite des Trägermaterials wird der Kontaktübergang zwischen Band und den zu verschweißenden Blechen verbessert. Durch die identischen Schichten aus Kupfer auf der Blechseite und der Elektrodenseite ist des weiteren eine schnelle und billige Herstellung des Bandes gegeben. Ebenso ist von Vorteil, dass durch die Schicht aus Kupfer ein Korrosionsschutz für das Trägermaterial bzw. das Band gegeben ist.

Ebenso wird eine Aufgabe der Erfindung durch ein Elektrodenschutzband gemäß Anspruch 4 gelöst, wobei zumindest an der der Elektrode zugewandten Seite des Trägermaterials zumindest zwei Schichten aus unterschiedlichem Material angeordnet sind, wobei eine Schicht aus Kupfer und eine Schicht aus Nickel bzw. einer Nickel-Legierung gebildet ist und die Schichten jeweils eine Dicke von 0,5 bis 1,5 µm aufweisen. Vorteilhaft ist hierbei, dass durch die entsprechende Dicke der Schichten ein Hineindiffundieren des Trägermateriales in die Elektrodenkontaktfläche verhindert wird und somit die Standzeit bzw. Haltbarkeit der Elektrode erhöht wird. Des Weiteren wird durch die entsprechende Dicke der Schichten auch in vorteilhafter Weise erreicht, dass der Kontaktübergang von der Elektrode auf das Band verbessert wird. Ebenso ist auch von Vorteil, dass durch die Schichten ein Korrosionsschutz für das Trägermaterial bzw. das Band gegeben ist. Durch die Kombination der Schichten wird in vorteilhafter Weise erreicht, dass ein wesentlich höherer Strom von der Elektrode auf das Band übertragen werden kann, ohne dass sich dies negativ auf die Standzeit bzw. Haltbarkeit der Elektrode auswirkt.

Wenn die Kupfer-Schicht auf einer auf dem Trägermaterial angeordneten Haftschicht aus Kupfer mit einer Dicke im Bereich von 200 µm angeordnet ist, wird das Auftragen der darüber liegenden Schichten zum Erreichen höherer Schweißströme erleichtert, da die Haftschicht als Haftvermittler dient.

Gemäß einem weiteren Merkmal der Erfindung ist vorgesehen, dass das Trägermaterial aus Kupfer besteht und eine Dicke von 0,1 bis 0,3 mm aufweist. Dadurch wird in vorteilhafter Weise erreicht, dass die erforderliche Stabilität des Bandes gewährleistet ist und aufgrund der ausgezeichneten elektrischen Leitfähigkeit hohe Ströme zum Verschweißen angewendet werden können.

Wenn die an der Blechseite des Trägermaterials angeordneten Schichten mit den an der Elektrodenseite des Trägermaterials angeordneten Schichten identisch sind, wird die Herstellung vereinfacht, da keine aufwändigen Arbeiten zum Abdecken einer Seite des Trägermaterials erforderlich sind. Ebenso ist von Vorteil, dass die beidseitig am Trägermaterial aufgetragenen Schichten die entsprechenden Erfordernisse erfüllen. Die Schichten schützen auf der Elektrodenseite die Elektrode und verbessern auf der Blechseite die Konstrastbildung. Der Schutz der Elektrode wird durch die fehlende Schicht aus Zinn auf der Elektrodenseite unterstützt, da diese an der Elektrode Ablagerungen verursachen würde. Somit wird die Standzeit bzw. Haltbarkeit der Elektrode wesentlich verlängert.

Wenn das Trägermaterial aus weichem Stahl gebildet ist und eine Dicke von 0,1 bis 0,2 mm aufweist, wird die erforderliche Stabilität des Bandes gewährleistet. Ebenso wird durch die einzelnen Schichten beidseitig am Trägermaterial, also Stahl, die Korrosionsbeständigkeit des Stahls wesentlich erhöht. Ein weiterer Vorteil besteht darin, dass durch den weichen Stahl das Trägermaterial bzw. das Band leichter um die Elektrode transportiert werden kann und sich das Band besser zwischen Elektrode und Blech fügt.

Das Band wird um die Elektrode der Punktschweißzange geführt, und danach verändert das Band nach einer Punktschweißung seine Position. Dadurch wird in vorteilhafter Weise erreicht, dass das Band die Elektrode schützt, wodurch dementsprechend die Standzeit bzw. die Haltbarkeit der Elektrode verlängert wird.

Die vorliegende Erfindung wird anhand der beigefügten, schematischen Zeichnungen näher erläutert. Darin zeigen:
- Fig. 1: eine schaubildliche Darstellung einer Punktschweißvorrich- tung für das erfindungsgemäße Verfahren zur Qualitätsüber- wachung von Punktschweißungen in vereinfachter, schematischer Darstellung;
- Fig. 2: eine schaubildliche Darstellung eines Schnitts durch einen Schweißpunkt und eines zugehörigen Abdrucks auf dem Elek- trodenschutzband; und
- Fig. 3: bis Fig. 7 verschiedene Ausführungsformen von erfindungs- gemäßen Bändern mit entsprechenden Schichten.

Einführend wird festgehalten, dass gleiche Teile des Ausführungsbeispiels mit gleichen Bezugszeichen versehen werden.

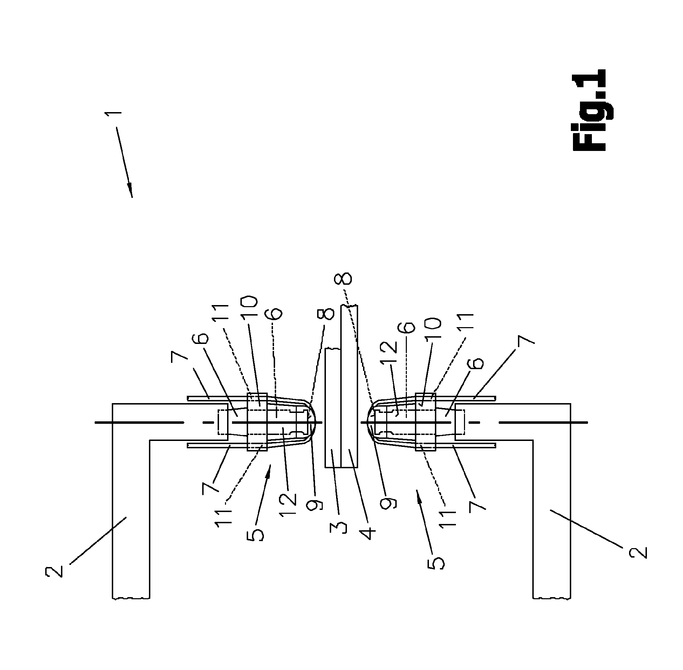

In Fig. 1 ist eine Punktschweißvorrichtung 1 in Form einer Schweißzange 2 zum Widerstandsschweißen von Blechen 3, 4 oder Bauteilen gezeigt, welche bevorzugt für Roboteranwendungen eingesetzt wird. Bevorzugt wird die Punktschweißvorrichtung 1 bzw. Punktschweißzange mit einem Punktschweißwerkzeug 5 und mit einer Wickelvorrichtung (nicht dargestellt) zum Auf- und Abwickeln von einem an einer Elektrode 6 quer anliegenden Band 7 bzw. einer Folie ausgestattet. Die Wickelvorrichtung ist direkt an der Schweißzange 2 oder außerhalb dieser angeordnet.

Die Führung des Bandes 7 um die Elektrode 6 kann auf verschiedene Arten erfolgen, von welcher anschließend ein Ausführungsbeispiel kurz erläutert wird. Beim Ausführungsbeispiel ist es nicht erforderlich, ein Punktschweißwerkzeug 5 einzusetzen, sondern es muss lediglich die Elektrode 6 vorhanden sein, wobei die weiteren Komponenten zum Führen und Auf- und Abwickeln des Bandes 7 als eigenständige Vorrichtungen ausgebildet und entsprechend angeordnet werden. Beim dargestellten Ausführungsbeispiel ist um die Elektrode 6 im Bereich einer Elektrodenkappe 8 bzw. einer Kontaktfläche der Elektrode 6 mit dem Blech 3, 4 ein Distanzhalter 9 angeordnet. Der Distanzhalter 9 ist beispielsweise beweglich an der Elektrode 6 befestigt, so dass über diesen die Bleche 3, 4 mit zusätzlichem Druck beaufschlagt werden können. Weiters wird durch die bewegliche Lagerung des Distanzhalters 9 erreicht, dass der Distanzhalter 9 das Band 7 nach einem Schweißprozess von der Elektrode 6 abhebt. Beim Schließen der Schweißzange 2 wird der Distanzhalter 9 gegenüber der Elektrode 6 verschoben, wodurch das Band 7 an der Elektrode 6 zum Anliegen kommt.

Beim dargestellten Ausführungsbeispiel besteht das Punktschweißwerkzeug 5 aus einem ringförmigen Aufbau, der in die Schweißzange 2 eingesetzt wird, wobei der Distanzhalter 9 aus einem Metallring mit niedriger elektrischer Leitfähigkeit besteht, der axial an der zylindrischen Elektrode 6 verschiebbar angeordnet ist. Im entlasteten Zustand überragt der Distanzhalter 9 die Elektrode 6. Weiters ist an der Elektrode 6 ein Stützelement 10 angeordnet, welches Führungskanäle 11 zur Aufnahme des Bandes 7 aufweist. Zwischen dem Stützelement 10 und dem Distanzhalter 9 ist ein Verstellmittel 12, insbesondere ein Federelement, angeordnet, wodurch der Distanzhalter 9 mit entsprechender Druckbeaufschlagung entlang der Elektrode 6 verschoben werden kann, wobei das Verstellmittel 12 verformt bzw. verfahren wird.

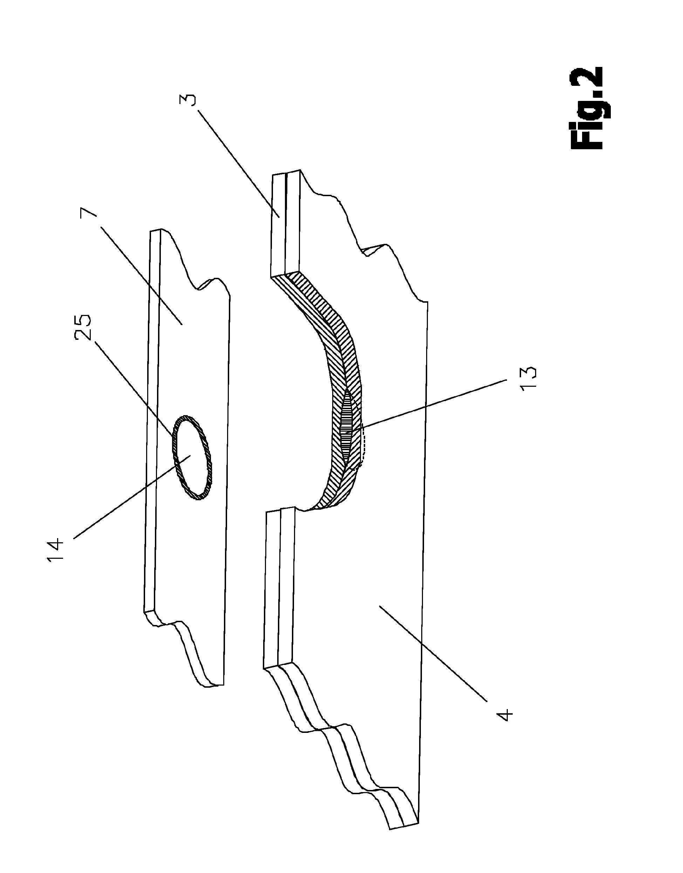

Durch die Schweißzange 2 werden während des Punktschweißprozesses die Bleche 3, 4 über die Elektroden 6 mechanisch aneinander gepresst. Beim Punktschweißprozess wird das zu verbindende Metall durch ohmsche Widerstandserwärmung aufgrund eines Stromflusses zwischen den Elektroden 6 schnell und für kurze Zeit aufgeschmolzen, wobei durch Wärmeleitung der aufgeschmolzene Bereich anschließend wieder schnell abkühlt und erstarrt. Die Bleche 3, 4 sind über einen Schweißpunkt 13 bzw. eine Schweißlinse, wie schematisch in Fig. 2 dargestellt, miteinander verbunden.

Die entstehende Wärmemenge und somit das aufgeschmolzene Materialvolumen hängt von der Leitfähigkeit des Materials der Bleche 3, 4, von der Schweißzeit, vom Schweißstrom, genauer von der Stromdichte durch den gewünschten Schweißpunkt 13, und den einzelnen Widerständen des Schweißstromkreises ab. Folgende Parameter bzw. Zustände müssen bei einem derartigen Schweißprozess berücksichtigt werden, die oft nur durch erheblichen Steuer- oder Regelaufwand ausgeglichen werden können oder überhaupt nicht überwacht bzw. darauf Einfluss genommen werden kann: Die elektrische und thermische Leitfähigkeit ist materialspezifisch aber weitgehend determiniert. Die Schweißzeit ist mit relativ geringem Aufwand einzuhalten. Der Schweißstrom kann durch Regelung konstant gehalten werden. Allerdings kann durch deformierte, insbesondere verschlissene, Elektroden 6 die Kontaktfläche zu groß und damit die Stromdichte zu klein werden. Außerdem kann durch vorherige Schweißpunkte 13 oder Deformationen der Bleche 3, 4 Strom am gewünschten Schweißpunkt 13 vorbei fließen und nicht zur Materialaufschmelzung beitragen. Die Widerstände des Schweißstromkreises, insbesondere die überwiegenden Kontaktwiderstände unterliegen unvorhersehbaren und unkontrollierbaren Schwankungen, verursacht beispielsweise auch durch Verschmutzungen der Bleche 3, 4 oder der Elektrode 6. Weiters können schlechte Schweißpunkte 13 durch mangelhafte Positionierung der Schweißzange 2 oder der Bleche 3, 4 verursacht werden oder durch Deformationen der Bleche 3, 4, die verhindern, dass die Elektrode 6 das Blech 3 oder 4 oder die Bleche 3, 4 sich gegenseitig, wie notwendig, berühren. Oben genannte Gründe machen es dringend notwendig, die Schweißpunktqualität zu überwachen, insbesondere den Schweißpunkt 13 nach einem Schweißprozess zu kontrollieren.

Das Verfahren zur Qualitätsüberwachung von Punktschweißungen basiert nun auf dem Prinzip, die Maximaltemperaturen mit ihrer geometrischen Ausbreitung an den Blechoberflächen, also den Schweißpunkt 13, zu erfassen. Dabei liegt während der Schweißung das elektrisch gut leitfähige Band 7 zwischen Elektrode 6 und Blech 3, 4. Das Band 7 verändert abhängig von der höchsten Temperatur an der jeweiligen Stelle ihre Eigenschaften, so dass eine spiegelbildliche, insbesondere proportionale Abbildung bzw. ein Abdruck 14, wie schematisch in Fig. 2 dargestellt, des an den Blechen 3, 4 geschaffenen Schweißpunkts 13 am Band 7 entsteht. Dieser Abdruck 14 am Band 7 wird von einem Auswertemittel (nicht dargestellt) erfasst und ausgewertet. Über den Abdruck 14 kann auf die Größe, Form und Lage des Schweißpunktes 13 rückgeschlossen werden. Das Auswertemittel, also beispielsweise eine Kamera mit einer entsprechenden Steuervorrichtung, kann direkt an der Schweißzange 2 positioniert werden, so dass das Band 7 an diesem vorbeibewegt wird und somit die Auswertung vorgenommen werden kann. Das Auswertemittel kann auch extern angeordnet werden.

Der spiegelbildliche Abdruck 14 kann beispielsweise durch eine dünne Beschichtung auf einem Trägermaterial 24 des Bandes 7 hervorgerufen werden. Diese Beschichtung ist an jener Oberfläche des Bandes 7, die den Blechen 3, 4 zugeordnet ist, also an der so genannten Blechseite 15, angeordnet. Die Beschichtung vollzieht im Bereich der Schmelztemperatur des zu verschweißenden Materials der Bleche 3, 4 einen deutlich sichtbaren oder einen anderwärtig erfassbaren Eigenschaftswandel oder schmilzt selbst, so dass der spiegelbildliche Abdruck 14 entsteht. Dieser Abdruck 14 ist ein Maß für die Schweißpunktgröße und kann mit vertretbarem Aufwand automatisiert ausgewertet werden.

Der Abdruck 14 wird hauptsächlich durch eine auf der Blechseite 15 des Bandes 7 aufgetragene Schicht aus Zinn 16 hervorgerufen. Durch die Temperatur während des Punktschweißprozesses wird diese Schicht aus Zinn 16 geschmolzen bzw. verdampft, wodurch der spiegelbildliche Abdruck 14 des Schweißpunktes 13 auf der Blechseite 15 des Bandes 7 entsteht.
Beim Verschweißen von Blechen 3, 4 aus Aluminium wird bevorzugt ein Band 7 mit einer Schicht aus Zinn 16 und beim Verschweißen von verzinkten Blechen 3, 4, wie beispielsweise Stahl, bevorzugt ein Band 7 mit einer Schicht aus Kupfer 17 verwendet.

Damit der Abdruck 14 vom Auswertemittel erfasst und ausgewertet werden kann, ist ein gewisser Kontrast des Abdrucks 14 gegenüber der Blechseite 15 erforderlich. Durch die Schicht aus Zinn 16 entsteht ein so genannter Kreisring 25 um den Schweißpunkt 13 bzw. den Abdruck 14, durch welchen der Kontrast erzielt wird. Bei bekannten Bändern 7 stellt sich der Kontrast erst nach einer gewissen Zeit, insbesondere nach mehreren Stunden, ein. Der Abdruck 14 kann somit erst dann detektiert werden, wenn sich der erforderliche Kontrast eingestellt hat.

Erfindungsgemäß werden auf das Band 7 entsprechende kontrastverstärkende Schichten aufgetragen, so dass sich der Kontrast rasch einstellt und das Auswertemittel den Abdruck 14 im Wesentlichen unmittelbar nach der Punktschweißung detektieren kann.

Somit kann das Auswertemittel in unmittelbarer Nähe der Elektrode 6, beispielsweise an der Schweißzange 2, angeordnet sein, und den Abdruck 14 erfassen bzw. vermessen und auswerten. Insbesondere wird die Qualität des Schweißpunktes 13 aufgrund der Größe, Form, Oberfläche, Lage und der Eindringtiefe der Elektrode 6 des Abdrucks 14 ermittelt. Die Qualitätsparameter kann das Auswertemittel im Wesentlichen aus dem Durchmesser, der Oberflächenstruktur und/oder der Farbe des Abdrucks 14 bestimmen. Dazu ist es erforderlich, dass der Durchmesser des Abdrucks 14 eindeutig detektiert werden kann. Dies wird durch die am Band 7 angeordneten erfindungsgemäßen Schichten, insbesondere die oberste Schicht bzw. die obersten zwei Schichten, erreicht, welche den Kreisring 25 um den Abdruck 14 bewirken. Dieser Kreisring 25 weist eine entsprechend unterschiedliche Farbe gegenüber der Blechseite 15 und des Schweißpunktes 13 auf und bildet somit den erforderlichen Kontrast. Der Abdruck 14 ist durch den Kreisring 25 eindeutig von der Blechseite 15 des Bandes 7 getrennt. Dadurch kann das Auswertemittel den Durchmesser des Schweißpunktes 13 exakt erfassen und es können entsprechende Rückschlüsse auf die Qualität des Schweißpunktes 13 gezogen werden.

Die Position an der Schweißzange 2, an welcher das Auswertemittel befestigt ist, bestimmt die Verzögerung, mit welcher der Abdruck 14 erfasst wird. Beispielsweise beträgt die Verzögerung nur zwanzig Schweißpunkte 13. Dadurch ist auch gewährleistet, dass jeder Schweißpunkt 13 bzw. dessen Abdruck 14 erfasst wurde. Dies ist auch dann gegeben, wenn ein Wechsel des Bandes 7 erforderlich ist.

Somit wird eine aus dem Stand der Technik bekannte, aufwendige und nachträgliche Erfassung der Abdrücke 14 am Band 7 vermieden. Dies war bisher erforderlich, da sich der zur Erfassung erforderliche Kontrast erst nach etwa zwei Stunden einstellte und demnach in der Zwischenzeit das Band 7 gewechselt werden musste bzw. sich der Abdruck 14 bereits in der aufgewickelten Rolle des Bandes 7 befand.

Durch die im Wesentlichen sofortige Auswertung der Abdrücke 14 können fehlerhafte Schweißpunkte 13 auch rasch erkannt werden und erforderliche Korrekturen durchgeführt werden, bevor die nächsten Bearbeitungsschritte an den verschweißten Blechen 3, 4 durchgeführt werden.

Der für eine im Wesentlichen sofortige Auswertung des Abdruckes 14 erforderliche Kontrast wird erfindungsgemäß durch das Auftragen gleicher bzw. unterschiedlicher Schichten auf der Blechseite 15 am Band 7 realisiert. Hierbei werden die Schichten bevorzugt beidseitig am Band 7, also auf der Blechseite 15 und einer Elektrodenseite 17, aufgetragen. Damit die kontrastverstärkenden Schichten einfach und kostengünstig aufgetragen werden können, wird bevorzugt eine Haftschicht 18 auf das Trägermaterial des Bandes 7 aufgebracht, welche den folgenden Schichten als Haftvermittler dient. Durch diese Maßnahmen werden die Herstellungskosten erheblich gesenkt und auch die Verschleißerscheinungen der Elektrode 6 erheblich minimiert.

Das Band 7 und die aufgetragenen Schichten sind entsprechend an das Material der Bleche 3, 4 und an die für die Punktschweißung erforderlichen Schweißparameter, insbesondere den Schweißstrom, angepasst.

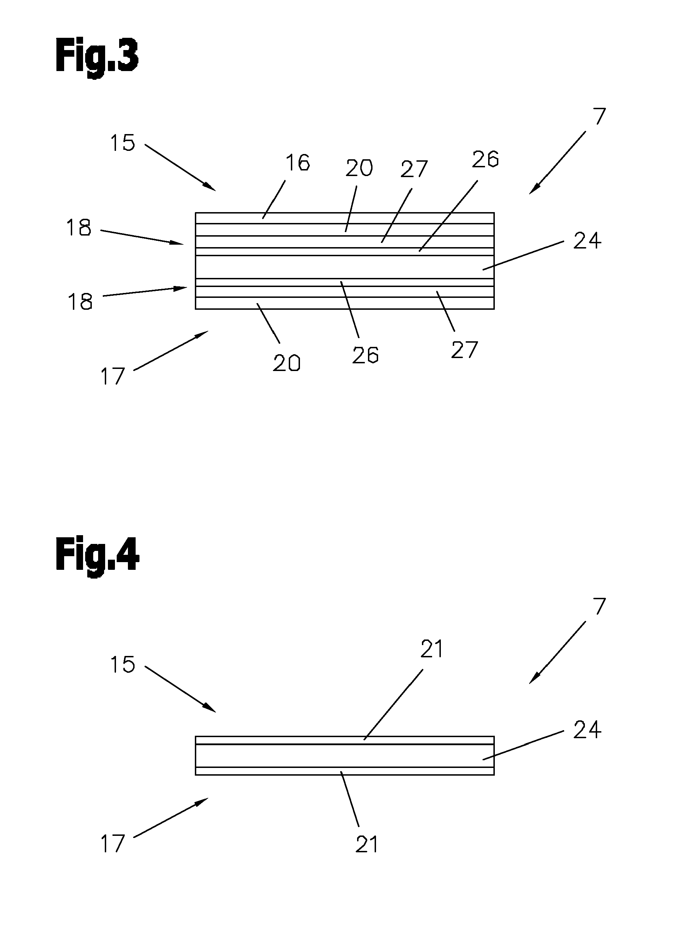

Dies ist aus den nachfolgenden Ausführungsbeispielen und den zugehörigen Fig. 3 bis 7 zu entnehmen. In Fig. 3 ist ein Band 7 zum Verschweißen von Aluminium bzw. Aluminium-Legierungen dargestellt, wobei die Anzahl der Schichten auf der Blechseite 15 und der Elektrodenseite 17 unterschiedlich ist. Als Trägermaterial 24 des Bandes 7 dient beispielsweise:
Stahl der Type ST 20, ST 40 usw., also weiche Stahlsorten. Die Dicke des Trägermaterials 24 liegt im Bereich zwischen 0,1 mm und 0,2 mm, insbesondere bei 0,15 mm. Die Mindestzugfestigkeit des Trägermaterials 24 des Bandes 7 beträgt zwischen 200 und 700 N/mm²_{.}

Die Haftschicht 18 kann aus zwei Schichten, beispielsweise einer ersten Haftschicht 26 und einer zweiten Haftschicht 27 gebildet werden, wodurch die Herstellung des Bandes 7 wesentlich vereinfacht wird.

An der Blechseite 15 des Bandes befindet sich eine erste Haftschicht 26 aus Nickel mit einer Dicke um 200 nm, insbesondere kleiner als 200 nm.
Zweite Haftschicht 27 aus Nickel, welche beispielsweise in einem Sulfamat-Bad aufgetragen wird, oder einer Nickel-Legierung; Dicke im Bereich zwischen 0,1 µm und 0,5 µm, insbesondere 0,2 µm bis 0,3 µm;
Schicht 20 aus Nickel-Phosphor; Dicke im Bereich zwischen 0,1 µm und 0,5 µm, insbesondere 0,2 µm bis 0,3 µm;
Schicht 16 aus Zinn; Dicke im Bereich zwischen 0,2 µm und 1,5 µm, insbesondere 0,5 µm bis 0,7 µm;

Schichten an der Elektrodenseite 17 des Bandes:
Erste Haftschicht 26 aus Nickel; Dicke im Bereich um 200 nm, insbesondere kleiner 200 nm;
Zweite Haftschicht 27 aus Nickel, welche in einem Sulfamat-Bad aufgetragen wird, oder aus einer Nickel-Legierung; Dicke im Bereich zwischen 0,1 µm und 0,5 µm, insbesondere 0,2 µm bis 0,3 µm;
Schicht 20 aus Nickel-Phosphor; Dicke im Bereich zwischen 0,1 µm und 0,5 µm, insbesondere 0,2 µm bis 0,3 µm;

Schweißparameter:
Schweißzeit: 100 ms bis 900 ms
Schweißstrom: 3 kA bis 35 kA
Schweißkraft: 2 kN bis 10 kN

Fig. 4 zeigt ein Band 7 für die Anwendung beim Verschweißen von Aluminium bzw. Aluminium-Legierungen, insbesondere von AlMgSi-Legierungen, bei welchem die Anzahl der Schichten auf der Blechseite 15 und der Elektrodenseite 17 identisch ist.

Trägermaterial 24 des Bandes 7:
Stahl der Type ST 20, ST 40 usw., also weiche Stahlsorten; die Dicke liegt im Bereich zwischen 0,1 mm bis 0,2 mm, insbesondere beträgt die Dicke 0,15 mm; die Mindestzugfestigkeit liegt im Bereich zwischen 200 und 700 N/mm²;
Schichten auf der Blechseite 15 und der Elektrodenseite 17: Schicht 21 aus Kupfer; Dicke im Bereich um 200 nm, insbesondere kleiner 200 nm;

Schweißparameter:
Schweißzeit: 100 ms bis 900 ms
Schweißstrom: 3 kA bis 35 kA
Schweißkraft: 2 kN bis 10 kN

Zur Auswertung des Schweißpunktes 13 bzw. des Abdrucks 14 beim Punktschweißen von verzinktem Stahl bzw. Stahllegierungen wird erfindungsgemäß ein Band 7 verwendet, welches aus Kupfer oder einer Kupfer-Legierung hergestellt ist (nicht dargestellt).

Der bereits erwähnte üblicherweise bläulich oder gräulich gefärbte Kreisring 25 um den gelblichen Abdruck 14 des Schweißpunkts 13 am Band 7 entsteht dadurch, dass das durch die Punktschweißung aufgeschmolzene Zink teilweise nach außen gedrängt wird und am Band 7 haften bleibt, jedoch keine Legierungsbildung erfolgt.

Die Auswertung der Qualität des Schweißpunktes 13 kann auch oder zusätzlich aufgrund der Farbe des Abdrucks 14 erfolgen. Dadurch, dass sich die Farbe des Abdrucks 14 entsprechend der Oberflächentemperatur der verschweißten Bleche 3, 4 ändert, ist die Farbe ein die Qualität des Schweißpunktes 13 repräsentierender Parameter. Die Oberflächentemperatur wiederum ist vom Schweißstrom und der damit verbundenen Wärmeeinbringung in die Bleche 3, 4 beim Punktschweißvorgang abhängig.

Schweißparameter:
Schweißzeit: 100 ms bis 900 ms
Schweißstrom: 3 kA bis 35 kA
Schweißkraft: 2 kN bis 10 kN

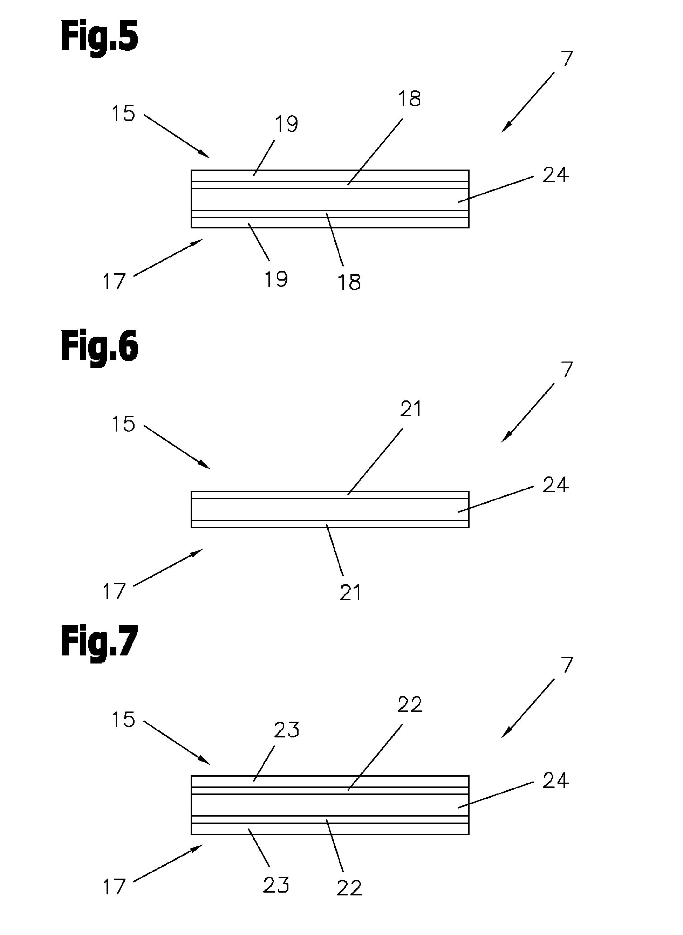

Fig. 5 zeigt ein Band 7 für die Anwendung beim Verschweißen von Aluminium bzw. Aluminium-Legierungen, bei welchem die Anzahl der Schichten auf der Blechseite 15 und der Elektrodenseite 17 wiederum identisch ist.

Trägermaterial 24 des Bandes 7:
Stahl der Type ST 20, ST 40 usw., also weiche Stahlsorten; die Dicke liegt im Bereich zwischen 0,1 mm bis 0,2 mm, insbesondere beträgt die Dicke 0,15 mm; die Mindestzugfestigkeit liegt im Bereich zwischen 200 und 700 N/mm²;
Schichten auf der Blechseite 15 und der Elektrodenseite 17: Haftschicht 18 aus Nickel; Dicke im Bereich um 200 nm, insbesondere kleiner 200 nm;
   Schicht 19 aus Nickel, welche in einem Sulfamat-Bad aufgetragen wird, oder aus einer Nickel-Legierung; Dicke im Bereich zwischen 0,1 µm und 0,5 µm, insbesondere 0,2 µm bis 0,3 µm;

Schweißparameter:
Schweißzeit: 100 ms bis 900 ms
Schweißstrom: 3 kA bis 35 kA
Schweißkraft: 2 kN bis 10 kN

Fig. 6 zeigt ein Band 7 für die Anwendung beim Verschweißen von Stahl bzw. Stahllegierungen, bei welchem die Anzahl der Schichten auf der Blechseite 15 und der Elektrodenseite 17 ebenfalls identisch ist.

Trägermaterial 24 des Bandes 7:
Stahl der Type ST 20, ST 40 usw., also weiche Stahlsorten; die Dicke liegt im Bereich zwischen 0,1 mm bis 0,2 mm, insbesondere beträgt die Dicke 0,15 mm; die Mindestzugfestigkeit liegt im Bereich zwischen 200 und 700 N/mm²;
Schichten auf der Blechseite 15 und der Elektrodenseite 17: Schicht 21 aus Kupfer; Dicke im Bereich zwischen 0,1 µm und 0,6 µm, insbesondere 0,2 µm oder 0,5 µm;

Schweißparameter:
Schweißzeit: 100 ms bis 900 ms
Schweißstrom: 3 kA bis 35 kA
Schweißkraft: 2 kN bis 10 kN

Selbstverständlich kann auch hier die Schicht 21 aus Kupfer auf einer auf dem Trägermaterial 24 aufgetragenen Haftschicht 18 mit einer Dicke im Bereich um 200 nm angeordnet sein.

Fig. 7 zeigt ein Band 7 für die Anwendung beim Verschweißen von Stahl bzw. Stahllegierungen, bei welchem die Anzahl der Schichten auf der Blechseite 15 und der Elektrodenseite 17 identisch ist.

Trägermaterial 24 des Bandes 7:
Kupfer, dessen Dicke im Bereich zwischen 0,1 mm bis 0,3 mm liegt, insbesondere eine Dicke von 0,2 mm aufweist.
Schichten auf der Blechseite 15 und der Elektrodenseite 17: Schicht 22 aus Kupfer; Dicke im Bereich zwischen 0,5 µm und 1,5 µm, insbesondere 1 µm;
Schicht 23 aus Nickel, welche in einem Sulfamat-Bad aufgetragen wird, oder aus einer Nickel-Legierung; Dicke im Bereich zwischen 0,5 µm und 1,5 µm, insbesondere 1 µm;

Schweißparameter:
Schweißzeit: 100 ms bis 900 ms
Schweißstrom: 3 kA bis 35 kA
Schweißkraft: 2 kN bis 10 kN

Selbstverständlich kann auch hier die Schicht 22 aus Kupfer auf einer auf dem Trägermaterial 24 aufgetragenen Haftschicht (nicht dargestellt) mit einer Dicke im Bereich um 200 nm angeordnet sein.

Für eine möglichst einfache und daher kostengünstige Herstellung des Bandes 7 sind die Schichten auf der Blechseite 15 und der Elektrodenseite 17 identisch. Auch weisen die Schichten entsprechende Eigenschaften auf, so dass auf beiden Seiten des Bandes 7 die erforderliche Wirkung erzielt wird. Selbstverständlich können die Schichten noch effizienter an die jeweiligen Erfordernisse auf der Blechseite 15 bzw. der Elektrodenseite 17 angepasst werden, indem auf der Blechseite 15 und der Elektrodenseite 17 unterschiedliche Schichten aufgetragen werden.

Auch kann ein aus dem Stand der Technik bekanntes Band 7 mit einer Beschichtung aus Zinn eingesetzt werden, bei dem für eine schnellere Kontrastbildung der spiegelbildliche Abdruck 14 am Band 7 befeuchtet wird. Dies kann beispielsweise derart erfolgen, dass vor dem Auswertemittel eine Vorrichtung angebracht wird, die den Abdruck beispielsweise mit Wasser befeuchtet, einen Ultraschallnebel oder Wasserdampf abgibt oder das Band 7 mit der Blechseite 15 über einen feuchten Filz oder eine feuchte Walze führt. Dies würde jedoch einen erheblichen Mehraufwand bedeuten, im Gegensatz zu den erfindungsgemäßen Bändern 7 mit der entsprechenden Beschichtung.

## Patentansprüche

1. Band (7) zum Schutz der Elektroden (6) einer Punktschweißzange zum Schweißen von Blechen (3, 4) aus Aluminium oder einer Aluminium-Legierung, mit einem Trägermaterial (24), wobei an der den Blechen (3, 4) zugewandten Seite (15) zumindest eine elektrisch leitfähige Schicht (16) und zumindest an der der Elektrode (6) zugewandten Seite (17) des Trägermaterials (24) eine Schicht (19) aus Nickel bzw. einer Nickel-Legierung angeordnet ist, **dadurch gekennzeichnet, dass** die Nickel-Schicht (19) mit einer Dicke von 0,1 µm bis 0,5 µm auf einer auf dem Trägermaterial (24) aufgetragenen Haftschicht (18) aus Nickel angeordnet ist.

2. Band (7) nach Anspruch 1, **dadurch gekennzeichnet, dass** die Haftschicht (18) aus Nickel eine Dicke im Bereich um 200 nm aufweist.

3. Band (7) zum Schutz der Elektroden (6) einer Punktschweißzange zum Schweißen von Blechen (3, 4) aus Stahl bzw. Stahllegierungen, mit einem Trägermaterial (24), wobei an der, den Blechen (3, 4) zugewandten Seite (15) und an der Elektrode (6) zugewandten Seite (17) des Trägermaterials (24) jeweils zumindest eine elektrisch leitfähige Schicht (16, 21) aus Kupfer angeordnet ist, **dadurch gekennzeichnet, dass** die Kupfer-Schichten (16, 21) eine Dicke zwischen 0,1 µm und 0,6 µm aufweisen.

4. Band (7) zum Schutz der Elektroden (6) einer Punktschweißzange zum Schweißen von Blechen (3, 4) aus Stahl bzw. Stahllegierungen, mit einem Trägermaterial (24), wobei an der den Blechen (3, 4) zugewandten Seite (15) zumindest eine elektrisch leitfähige Schicht (16) angeordnet ist, **dadurch gekennzeichnet, dass** zumindest an der der Elektrode (6) zugewandten Seite (17) des Trägermaterials (24) zumindest zwei Schichten (22, 23) aus unterschiedlichem Material angeordnet sind, wobei eine Schicht (22) aus Kupfer ist, und eine Schicht (23) aus Nickel bzw. einer Nickel-Legierung gebildet ist und die Schichten (22, 23) jeweils eine Dicke von 0,5 µm bis 1,5 µm aufweisen.

5. Band (7) nach Anspruch 4, **dadurch gekennzeichnet, dass** die Kupfer-Schicht (22) auf einer auf dem Trägermaterial (24) angeordneten Haftschicht aus Kupfer mit einer Dicke im Bereich von 200 nm angeordnet ist.

6. Band (7) nach Anspruch 4 oder 5, **dadurch gekennzeichnet, dass** das Trägermaterial (24) aus Kupfer besteht und eine Dicke von 0,1 mm bis 0,3 mm aufweist.

7. Band (7) nach einem der Ansprüche 1 bis 6, **dadurch gekennzeichnet, dass** die an der Blechseite (15) des Trägermaterials (24) angeordneten Schichten (16, 18, 19, 20, 21, 22, 23, 26, 27) mit den an der Elektrodenseite (17) des Trägermaterials (24) angeordneten Schichten (16, 18, 19, 20, 21, 22, 23, 26, 27) identisch sind.

8. Band (7) nach einem der Ansprüche 1 bis 7, **dadurch gekennzeichnet, dass** das Trägermaterial (24) aus weichem Stahl gebildet ist und eine Dicke von 0,1 mm bis 0,2 mm aufweist.

9. Band (7) nach einem der Ansprüche 1 bis 6, **dadurch gekennzeichnet, dass** das Band (7) um die Elektrode (6) der Punktschweißzange geführt ist und das Band (7) nach einer Punktschweißung seine Position verändert.
